# EUROPÄISCHE PATENTSCHRIFT

(11) **EP 2 620 775 B1**
(45) Veröffentlichungstag und Bekanntmachung des Hinweises auf die Patenterteilung: **27.05.2015**
(21) Anmeldenummer: 12152830.1
(22) Anmeldetag: 27.01.2012
(51) Int. Cl.: G01N 35/02, G01N 35/04

(54) **Aufnahmemagazin**
Holder cartridge
Cartouche d'enregistrement

(43) Veröffentlichungstag der Anmeldung: 31.07.2013
(73) Patentinhaber: GLP systems GmbH, 21079 Hamburg (DE)
(72) Erfinder: Hecht, Robert, 82418 Seehausen (DE)
(74) Vertreter: Raffay & Fleck

(56) Entgegenhaltungen:
- DE-A1- 19 912 211
- US-A- 5 923 428
- US-A1- 2011 115 610
- US-B1- 6 255 614

## Beschreibung

Die Erfindung betrifft ein Aufnahmemagazin zur Aufnahme einer Vielzahl von entlang einer Längsachse langgestreckten, insbesondere im Wesentlichen zylinderförmigen Probenträgern gemäß dem Oberbegriff des Patentanspruchs 1. Sie betrifft ferner ein Verfahren zum Überwachen des Vorhandenseins von Probenträgern und/oder Probenhaltern auf einem Magazintableau gemäß Anspruch 8.

Es ist bekannt, in verschiedentlichen Einrichtungen, so insbesondere in diagnostischen Medizinlaboren, aber auch in anderen Laboren und Einrichtungen, die Umgang mit Proben pflegen, in Probenträgern eingefüllte Proben zumindest über Teile eines Verfahrensablaufes automatisiert zu behandeln und bewegen.

So ist z.B. ein Probensortierer bekannt und in der DE 199 12 211 A1 beschrieben, mit dem in röhrchenförmigen Probenträgern befindliche Proben, z.B. Proben von Körperflüssigkeiten von Patienten, automatisiert sortiert werden können. Der dort offenbarte Probensortierer umfasst einen Eingangsbereich sowie einen Ausgangsbereich, wobei in beiden Bereichen tableauartige Auszugstische vorhanden sind, die mit Probenhaltern, dort auch als Racks bezeichnet, bestückt werden können, welche Probenhalter zum Aufnahmen der Probenträger ausgebildet sind. Zum manuellen Bestücken der Auszugstische mit Probenhaltern bzw. der auf den Auszugstischen befindlichen Probenhaltern mit Probenträgern kann der Auszugstisch in eine Ladestellung ausgezogen werden, in der ein manuelles Bestücken möglich ist. Anschließend wird der Auszugstisch in eine Bereitschaftsstellung verbracht, in der die einzelnen Probenträger mit einem Robotergreifer erfasst und sortiert werden können.

Eine derartige automatisierte Sortierung reduziert nicht nur den Personalaufwand in einem entsprechenden Labor, sie verringert auch die Fehleranfälligkeit und kann Abläufe beschleunigen. Entsprechende Automatisierungen beschränken sich aber nicht allein auf in einer einzigen Einrichtung manifestierte Probensortierer, wie sie in der DE 199 12 211 A1 offenbart sind, auch ist es denkbar, ähnliche Aufnahmemagazine in automatisierten Analyseanlagen zu positionieren, von wo aus beispielsweise eine automatische Analysestrecke mit einzelnen Proben beschickt wird bzw. wo am Ende einer automatisierten Analysestrecke Proben, die diese durchlaufen haben, eingesammelt und vor einer manuellen Entnahme zwischengelagert werden.

US2011/115610 beschreibt ein Archiv für Laborproben. Dabei werden die Proben in Laden gelagert und beim Öffnen und Schließen der Laden werden mittels RFID Leser Informationen bezüglich dieser Proben gelesen. Die Laden verfügen über keinen Wegsensor und Information über die Bestückung der Laden wird beim Lesen der RFID Chips nichtermittelt.

Typischerweise werden derartige Aufnahmemagazine, wie sie der bekannte Probensortierer gemäß DE 199 12 211 A1 in seinem Eingangsbereich bzw. seinem Ausgangsbereich aufweist, manuelle bestückt bzw. entleert, wozu eine Bedienperson die in der DE 199 12 211 A1 als Auszugstischchen bezeichneten verschiebbaren Magazintableaus aus der Bereitschaftsstellung in die Ladestellung verbringt (entweder mechanisch aufzieht oder motorisch angetrieben verfährt), um dann entsprechend Probenhalter einzustellen oder zu entnehmen oder aus den auf dem Magazintableau verbleibenden Probenhaltern Probenträger zu entnehmen oder in diese entsprechende Probenträger einzustellen.

Diese manuelle Bestückung stellt wie jeder menschliche Eingriff eine Fehlerquelle dar. So kann beispielsweise eine Bedienperson bei einem zu entleerenden Magazintableau die Entnahme eines oder mehrerer Probenhalter bzw. von darauf angeordneten Probenträger oder Probenträgern versäumen und das Magazintableau verfrüht in die Bereitschaftsstellung zurück verfahren. Ebenso ist es denkbar, dass z.B. bei einer manuellen Eingabe der erfolgten Bestückung eines Magazintableaus in einem Bereich, in dem Probenträger in ein automatisiertes System eingespeist werden, falsche Angaben gemacht werden, bestimmte Plätze für Probenträger oder Probenhalter als nicht besetzt angegeben werden, an denen sich Probenträger oder Probenhalter befinden, bzw. umgekehrt. All dies kann unweigerlich zu Fehlern eines sich daran anschließenden automatisierten Ablaufes führen, indem zu manipulierende Probenhalter von einem automatisierten System nicht ergriffen werden können, wenn die entsprechenden Positionen als "nicht besetzt" ausgewiesen sind bzw. indem auf als vermeintlich nicht besetzte Position in einem Abstellbereich geführte Positionen, in denen versehentlich Probenträger verblieben sind, ein weiterer Probenträger abgestellt wird, was zu einer Kollision, schlimmstenfalls zu einer Zerstörung des Probenträgers und damit z.B. im Falle eines automatisierten medizinischen Diagnosesystems zu einer Kontaminierung dieses Systems mit beispielsweise einer Blutprobe, einer Urinprobe oder dgl. und damit einem Systemstillstand für eine durchzuführende Dekontamination führen kann. Auch ist es umgekehrt möglich, dass in einem Bereich, in dem Proben abgestellt werden sollen, ein Probenträger in einem vermeintlich dort vorhandenen Probenhalter abgestellt werden soll, ohne dass der Probenhalter dort tatsächlich befindlich ist. Dabei würde der Probenträger nicht sicher aufgenommen werden, es könnte auch hier zu einer Verunfallung und schlimmstenfalls einer Kontamination des Systems führen.

Da in insbesondere modernen medizinischen Laboranalysen für die einzelne Analyse gezahlte Honorare äußerst gering sind, kann ein medizinisches Labor nur dann wirtschaftlich arbeiten, wenn es einen hohen Durchsatz an Proben fährt. Ein Ausfall eines automatisierten Analysesystems bedeutet dort einen besonders hohen wirtschaftlichen Schaden.

Dieser oben geschilderten Problematik soll mit der Erfindung begegnet werden, indem eine einfache und zuverlässige Detektionsmöglichkeit geschaffen wird, mit der das Vorhandensein von Probenhaltern bzw. Probenträgern auf dem Magazintableau erfasst werden und mit erwarteten Werten abgeglichen werden kann.

Diese Aufgabe wird hinsichtlich der Vorrichtung gelöst durch ein Aufnahmemagazin mit den Merkmalen des Patentanspruchs 1. Vorteilhafte Weiterbildungen eines solchen Aufnahmemagazins sind in den abhängigen Ansprüchen 2 bis 7 charakterisiert. Ein weiterer Aspekt der Lösung dieser Aufgabe besteht in einem Verfahren zum Überwachen des Vorhandenseins von Probenträgern und/oder Probenhaltern auf einem Magazintableau mit den Merkmalen des Anspruchs 8. Weiterbildungen des Verfahrens sind in den abhängigen Ansprüchen 9 bis 12 aufgezeigt.

Der wesentliche Ansatz der Erfindung besteht nun darin, für die Überwachung des Vorhandenseins von Probenhalter(n) bzw. Probenträger(n) wenigstens einen ortsfest am Aufnahmemagazin (insbesondere in Bezug auf das verschiebbare Magazintableau) angeordneten berührungslos arbeitenden Detektor zum Detektieren des Vorhandenseins von Gegenständen anzubringen, der mit einem Sensorbereich denjenigen Bereich abdeckt, der beim Verschieben des Magazintableaus von Probenhalter(n) bzw. Probenträger(n) überstrichen wird. Zudem wird ein Wegsensor vorgesehen, der einen Verschiebeweg bzw. eine aktuelle Position des Magazintableaus beim Verschieben desselben zwischen der Ladestellung und der Bereitschaftsstellung erfasst. Die von dieser Sensorkombination, also dem Detektor und dem Wegsensor, erfassten Daten werden korreliert in einer Auswerteeinheit. So kann mit der erfindungsgemäßen Lösung eine Aussage über eine Position auf dem Magazintableau getroffen werden, an der ein Probenhalter bzw. Probenträger von dem Detektor festgestellt worden ist.

Die Korrelation der Daten kann entweder unmittelbar durch Zusammenführen der von dem Detektor erfassten Daten mit den zugleich von dem Wegsensor wahrgenommenen Werten zu einem Wertetupel erfolgen, dies kann aber auch unter Zwischenschaltung weiterer Parameter erfolgen, z.B. eines Zeitwertes, der von der Auswerteeinheit oder einer Steuerung getaktet vorgegeben den jeweiligen Daten des Detektors bzw. Wegsensors zugeordnet wird, wobei über gleiche Zeitwerte dann in der Auswerteeinheit eine Korrelation zwischen den Werten bzw. Datenausgaben des Detektors und des Wegsensors hergestellt wird.

Der berührungslos arbeitende Detektor kann insbesondere eine Lichtschranke sein, mit Vorteil eine transmittive Lichtschranke (wobei grundsätzlich aber auch eine reflektive Lichtschranke möglich ist). Eine Lichtschranke stellt eine besonders einfache, kostengünstig und platzsparend herzustellende und in das System des Aufnahmemagazins integrierbare Möglichkeit eines solchen Detektors dar.

Der Wegsensor kann ein insbesondere optisch oder magnetisch detektierender Inkrementalsensor sein. Auch diese Art der Ausgestaltung des Wegsensors stelle eine kostengünstig zu realisierende und einfach in das Aufnahmemagazin integrierbare Realisierung dar. Es können aber auch andere Formen von Wegsensoren Verwendung finden, wie elektrische Sensoren (z.B. Potentiometer oder Absolutwertgeber). Auch ist es generell möglich, den Wegsensor in einen Antrieb zu integrieren, wenn das schubladenartige Magazintableau motorisch angetrieben verfährt.

Um insbesondere in einem einzigen Messvorgang sowohl hinsichtlich des Vorhandenseins von Probenhaltern als auch hinsichtlich des Vorhandenseins von Probenträgern einer Aussage treffen zu können oder alternativ Aussagen über Höhenerstreckungen der genannten Elemente fällen zu können, ist es von Vorteil, wenn wenigstens zwei, insbesondere aber eine Vielzahl von in einem Detektionsbereich vertikal übereinander angeordneten berührungslosen Detektoren vorgesehen sind, in einer Positionierung wie in Anspruch 5 angegeben. Insbesondere dann, wenn hierbei ein engmaschiges Raster von Detektoren vorgesehen ist, lässt sich mit den Messwerten dieser Detektoren mit Hilfe einer entsprechend eingerichteten Auswerteeinheit ein Profil von auf dem Magazintableau angeordneten Probenträgern bzw. -haltern aufnehmen, welches spezifischere Aussagen über die Art der Bestückung des Magazintableaus ermöglicht. So können beispielsweise anhand geometrischer Abmessungen bestimmte Probenhalter identifiziert werden, wenn unterschiedliche auf dem Magazintableau einsetzbare Probenhalter unterschiedliche geometrische Abmessungen in Richtung des Verschiebeweges des Magazintableaus oder aber in vertikaler Richtung aufweisen. Auch ist es grundsätzlich möglich, unterschiedlich bemessene Probenträger zu erkennen und darüber möglicherweise Rückschlüsse auf bestimmte Proben, wenn diese in Probenträgern bestimmter Abmessungen typischerweise befindlich sind, zu nehmen.

Typische Probenträger, wie sie insbesondere in medizinischen Analysen- und Diagnoselabors Verwendung finden, sind zylindrische Aufnahmerörchen, insbesondere aus Kunststoff. Diese erstrecken sich mit ihrer Längsachse in entsprechenden Probenhaltern in vertikaler Richtung, so dass mit einem wie gemäß der beschriebenen vorteilhaften Weiterbildung bevorzugt vorgesehenen Raster aus mehreren vertikal übereinander angeordneten Detektoren z.B. deren Länge, wie auch möglicherweise bei unterschiedlicher Breite deren Breite erfasst werden kann. Dabei ist es auch möglich, mehrere Reihen von vertikal übereinander angeordneten Detektoren nebeneinander anzuordnen, um ein noch dichteres Sensorbild zu erhalten.

Grundsätzlich ist es möglich, durch beispielsweise Vorgabe einer bestimmten Bestückung des Magazintableaus mit Probenhaltern bzw. Probenträgern, bei einer mittels der erfindungsgemäßen Sensorik festgestellten abweichenden tatsächlich existierenden Bestückung einen Alarm auszugeben, so dass eine Bedienperson den Beladungszustand des Aufnahmemagazins kontrollieren und ggf. anpassen bzw. dem System die korrekte Bestückung mitteilen kann. Auf diese Weise können Kollisionen oder sonstige Fehlfunktionen eines automatisierten Systems, in welches das erfindungsgemäße Aufnahmemagazin integriert ist, zuverlässig verhindert werden.

Auch wenn die erfindungsgemäße Lösung eine Auflösung der Detektion hinsichtlich einer im Wesentlichen horizontalen, quer zur Verschieberichtung des Magazintableaus verlaufenden Richtung nicht ergeben kann, gleichermaßen lediglich eine Projektion wahrnimmt, so schafft sie dennoch eine besonders einfache und für die praktische Anwendung ausreichende zusätzliche Kontrolle, die mit einfachen Mitteln hilft, Fehler zu erkennen und damit Folgeschäden bzw. in der Folge auftretende Funktionsstörungen eines mit dem Aufnahmemagazin versehenen automatisierten Systems zu verhindern.

Weitere Vorteile und Merkmale der Erfindung ergeben sich aus der Beschreibung eines Ausführungsbeispiels anhand der beigefügten Figuren. Dabei zeigen:
- Fig. 1: in einer perspektivischen Ansicht wesentliche Bestandteile eines Ausführungsbeispiels für ein erfindungsgemäßes Aufnahmemagazin;
- Fig. 2: ein durch Auswertung der Messergebnisse des berührungslos arbeitenden Detektors zum Detektieren des Vorhandenseins von Gegenständen in seinem Sensorbereich sowie des Wegsensors in der Auswerteeinheit erhaltenes Messprofil; und
- Fig. 3: einen vergrößerten Ausschnitt der Darstellung aus Fig. 1 in einem dort mit III bezeichneten Bereich.

In den Figuren sind zu einem Ausführungsbeispiel gehörend schematisch einige der wesentlichen Komponenten eines erfindungsgemäßen Aufnahmemagazins dargestellt. Im Nachfolgenden werden diese Figuren und anhand derselben ein Ausführungsbeispiel für eine mögliche Umsetzung eines erfindungsgemäßen Aufnahmemagazins beschrieben.

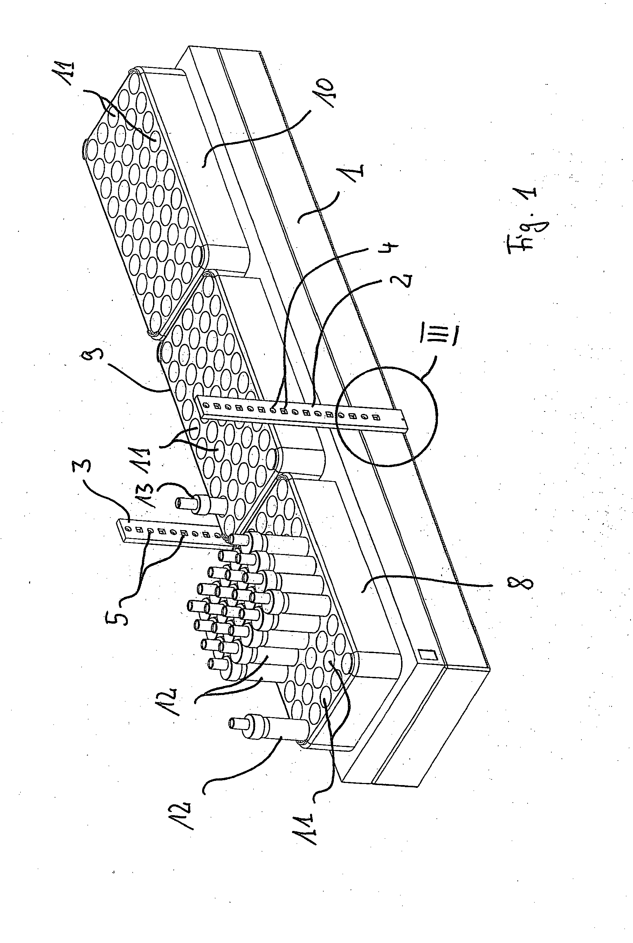

In Fig. 1 sind als wesentliche Bestandteile eines erfindungsgemäßen Aufnahme_magazins in einer möglichen Ausführungsvariante ein schubladenartig im Wesentlichen horizontal verschiebbares Magazintableau 1 und ein ortsfest an einer entsprechenden Basis des Aufnahmemagazins angeordnetes Paar aus einander in im Wesentlichen zu der Längserstreckungs- und Bewegungsrichtung des Magazintableaus 1 senkrecht gelegener Richtung gegenüberliegenden, sich im Wesentlichen vertikal erstreckenden Sensorleisten 2 und 3 gezeigt. Diese Sensorleisten 2, 3 sind, wie bereits ausgeführt, starr und ortsfest mit einer Basis des Aufnahmemagazins, die hier nicht näher gezeigt ist, verbunden; relativ zu dieser Basis ist das Magazintableau 1 schubladenartig und im Wesentlichen horizontal verschiebbar.

In den Sensorleisten 2, 3 sitzen in darin ausgebildeten, in vertikaler Richtung übereinander geordneten Öffnungen 4 bzw. 5 entsprechende Elemente einer Detektoranordnung, die in diesem Ausführungsbeispiel eine Lichtschrankenanordnung ist. Hierzu sind paarweise in horizontal zueinander ausgerichteten Öffnungen 4 bzw. 5 der Sensorleisten 2 bzw. 3 jeweils optischer Sender und ein optischer Empfänger bzw. ein optischer Sender/Empfänger und ein Reflektor angeordnet. Mit diesen Elementen kann so in später noch zu beschreibender Weise in Höhenprofil von detektierten Gegenständen aufgenommen werden.

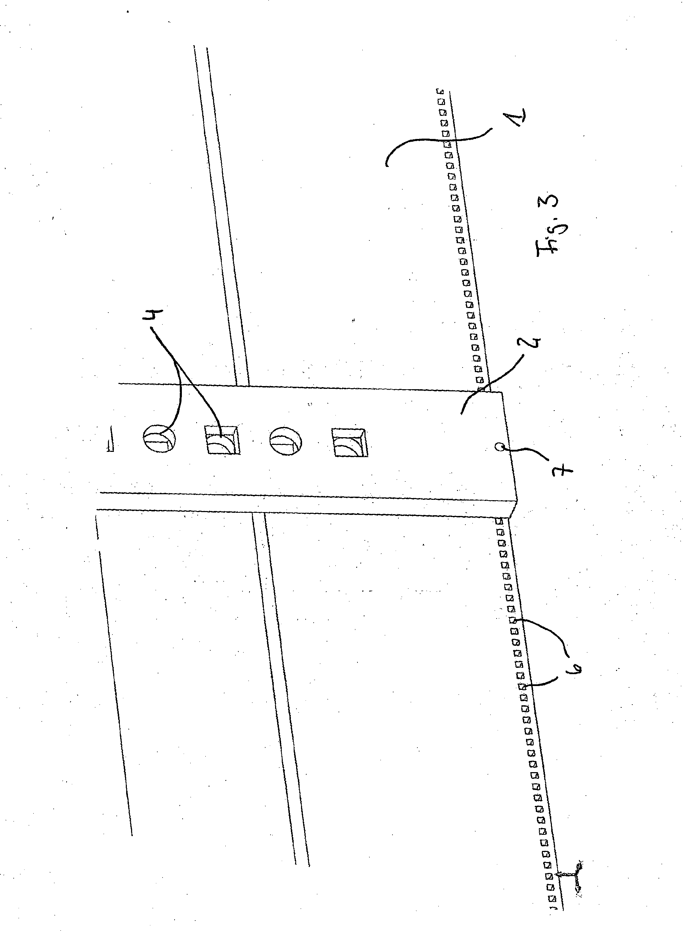

In einem in der Fig. 3 vergrößert dargestellten unteren Abschnitt weist das Magazintableau 1 eine Vielzahl von äquidistant angeordneten Markierungen 6 auf, die beispielsweise aus hochreflektierenden Elementen, aus dort in das Material des Magazintableaus eingebrachten Vertiefungen oder dgl. bestehen können. Vertikal einen Bereich dieser Markierungen 6 überdeckend ist in der Sensorleiste 2 eine Öffnung 7 zu erkennen, in welcher ein entsprechender Sensor angeordnet ist, der mit einem Detektionsabschnitt in Richtung der Markierungen 6 weist und diese erfassen kann. Mit dieser Anordnung ist ein Wegsensor realisiert, der bei einer Relativverschiebung des Magazintableaus 1 gegenüber der Sensorleiste 2 die vorbei streichenden Markierungen erfasst und damit einen fortschreitenden Verschiebeweg des Magazintableaus 1 detektiert.

Auf dem Magazintableau 1 sind in der Fig. 1 insgesamt drei hintereinander angeordnete Probenträger 8, 9, 10 dargestellt. Dabei handelt es sich um frei auf das Magazintableau 1 aufsetzbare, mit Halteöffnungen 11 versehene Aufnahmeblöcke für röhrchenförmige Probenhalter. Die Probenträger 8, 9 und 10 sind in der gezeigten Darstellung auf unterschiedliche Weise mit Probenhaltern bestückt. So ist auf dem Probenträger 8 eine Vielzahl von Probenhaltern 12 einer ersten Bauart angeordnet, wobei in einer in der Figur links dargestellten ersten Reihe lediglich im hinteren Bereich ein einziger Probenhalter angeordnet ist, zwei nachfolgende Reihen von Halteöffnungen frei von Probenträgern, also unbestückt sind, vier nachfolgende Reihen vollständig mit Probenhaltern 12 bestückt und im Anschluss drei weitere Reihen mit Halteöffnungen unbestückt sind.

Auf dem folgenden Probenträger 9 ist hingegen lediglich in einer hinteren Position der zweiten Reihe mit Halteöffnungen 11 ein Probenhalter 13 angeordnet. Der Probenhalter 13 ist verglichen mit den Probenhaltern 12 von unterschiedlichen Abmessungen, insbesondere in seiner Längserstreckung kürzer, ragt mithin weniger hoch aus der Halteöffnung 11 heraus.

Der Probenträger 10 ist gänzlich unbestückt.

Zwischen den Probenträgern 8, 9 und 10 ist jeweils stirnseitig ein Abstand belassen.

Das in dem Ausführungsbeispiel mit wesentlichen Komponenten gezeigte Aufnahmemagazin arbeitet nun wie folgt:

Wird das Magazintableau 1 relativ zu der hier nicht näher dargestellten Basis und damit auch relativ zu den Sensorleisten 2 bzw. 3 in horizontaler Richtung verschoben, beispielsweise aus einer Ladestellung, in der die Probenhalter und/oder Probenträger manuell beladen werden können (diese Ladestellung kann beispielsweise bei vollständig ausgezogenem Magazintableau 1, wenn dieses in Fig. 1 vollständig gegenüber den Sensorleisten 2 und 3 in der in der Figur rechts dargestellten Richtung verschoben ist, liegen) in eine Bereitschaftsstellung (dann in der Fig. 1 bei vollständiger Verlagerung in den links liegenden Bereich relativ zu den Sensorleisten 2, 3) so erfassen die in den Öffnungen 4 bzw. 5 der Sensorleisten 2 bzw. 3 angeordneten Detektoren, hier Lichtschranken, jeweils Signale der in ihrem Sensorweg befindlichen Gegenstände Probenhalter 8, 9, 10 bzw. Probenträger 12, 13. Zugleich wird mittels des oben bereits näher beschriebenen Zusammenspiels in der Öffnung 7 der Sensorleiste 2 angeordneten Sensors mit den auf dem Magazintableau angebrachten Markierungen 6 eine zurückgelegte Wegstrecke des Magazintableaus ermittelt. Wegen der Anordnung von einer Vielzahl von Sensorelementen in vertikaler Richtung übereinander angeordnet an den Sensorleisten 2, 3 geben bei unterschiedlicher Höhe der erfassten Gegenstände jeweils unterschiedliche Anzahlen der Sensoren ein Signal aus. Bei flacheren Gegenständen werden die höher Gelegenen Sensoren gerade kein Signal ausgeben.

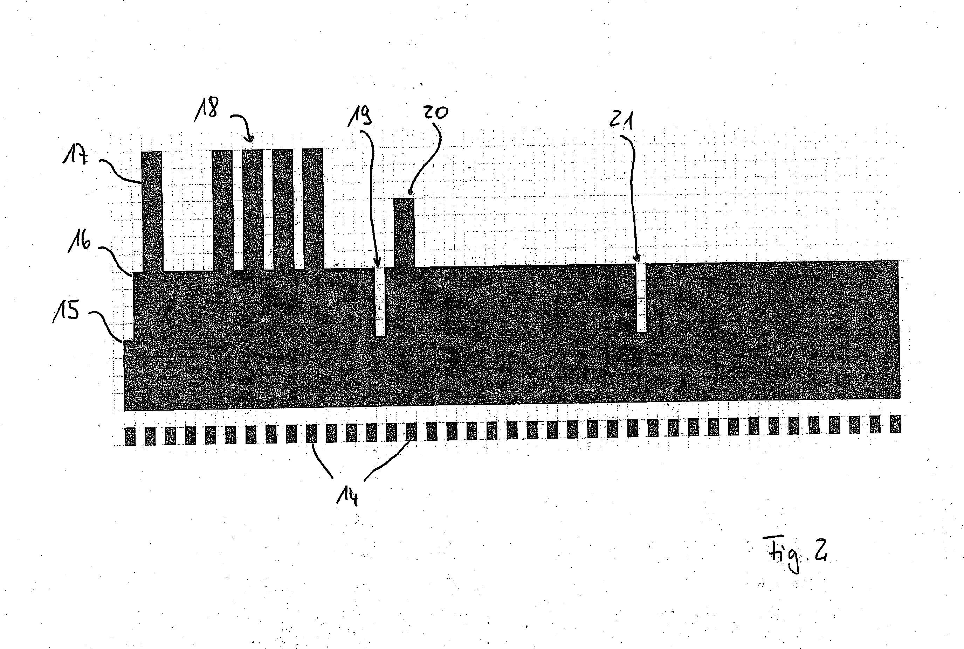

Die jeweils erfassten Signale der in den Öffnungen 4, 5 angeordneten Sensoren und des Wegsensors werden zueinander korreliert einer hier nicht näher dargestellten Auswerteeinheit zugeführt, dort zu einem Bestückungsprofil kombiniert, wie dies für die in der Fig. 1 dargestellte Situation in Fig. 2 gezeigt ist. Schematisch sind hier im unteren Abschnitt die Einzelsignale 14, die der in der Öffnung 7 angeordnete Sensor bei Detektion einer jeweils in seinem Detektionsfeld vorbeistreichenden Markierung 6 wahrnimmt, dargestellt, wobei diese Darstellung hier nicht mit dem tatsächlichen Maßstab übereinstimmt, sondern lediglich schematisch ist. Tatsächlich sind erheblich mehr Markierungen 6 angeordnet, als hier Einzelsignale 14 veranschaulicht sind.

Die Detektorauswertung bzw. das Profil in Fig. 2 ist in derselben Ausrichtung gezeigt, wie sie für das ausgewertete Bestückungsmuster des Magazintableaus 1 in Fig. 1 gegeben ist. D.h. der linksseitige Beginn des Profilverlaufes in Fig. 2 entspricht dem in der Fig. 1 links gezeigten Kantenbereich des Magazintableaus 1 und der darauf angeordneten Bestückung mit Probenhaltern und Probenträgern. In der Fig. 2 ganz links zu erkennen und mit 15 bezeichnet ist das Profil für die Vorderkante des Magazintableaus 1. Dann stellt die Lichtschrankenanordnung als Detektor für das Vorhandensein von Gegenständen die Vorderkante des ersten Probenhalters 8 fest, was sich in dem Profilabschnitt 16 zeigt. Bei 17 nehmen dann auch die vertikal höher angeordneten Lichtschrankensensoren auf den Sensorleisten 2 und 3 das Vorhandensein eines Gegenstandes wahr, dieser Signalabschnitt 17 entspricht dem am weitesten links angeordneten Probenhalter 12. Im Anschluss erfasst der Profilverlauf wiederum die Kontur des Probenträgers 8 und geht im Bereich 18 erneut aufwärts, d.h. die in vertikaler Höhe angeordneten Lichtschrankenelemente in den Sensorleisten 2 und 3 detektieren dort die vier hintereinander folgenden Reihen von Probenträgern 12 auf dem Probenhalter 8 mit einem vertikalen Profilabfall in den jeweiligen Zwischenräumen.

Im Abschnitt 19 fällt der Profilverlauf vertikal weiter ab, d.h. weitere vertikal höher angeordnete Lichtschrankensensoren, die zuvor aufgrund des Probenträgers 8 angeschlagen haben, geben kein Signal, da dort Zwischenraum zwischen den Stirnseiten des Probenträgers 8 und des Probenträgers 9 liegt. Der nachfolgende vertikale Anstieg des Profils zeigt das Vorhandensein des Probenhalters 9 an, wobei im Abschnitt 20 ein weiterer vertikaler Anstieg das Vorhandensein des Probenträgers 13 anzeigt, wobei in der Fig. 2 hier ein Profilverlauf gezeigt ist für eine etwas abweichende Anordnung des Probenträgers 13 gegenüber der Fig. 1, nämlich anstelle für einen in der zweiten Reihe mit Öffnungen 11 in der ersten, ganz links gelegenen Reihe dieses Probenhalters 9 angeordneten Probenträger 13.

Im weiteren Verlauf folgt das Profil, welches die Detektoreinheit aus Lichtschranken in den Sensorleisten 2 und 3 in Kombination mit dem von dem Wegsensor erfassten Wegverlauf ausgeben, dem tatsächlichen Höhenprofil des Probenhalters 9. In einem weiteren Abschnitt 21 erfolgt dann ein weiterer vertikaler Profileinbruch, der dem Zwischenraum zwischen dem Probenhalter 9 und dem Probenhalter 10 geschuldet ist. Der nachfolgende Anstieg des Profils zeigt den Probenhalter 10 und sein Profil, wobei der gradlinige detektierte Profilverlauf anzeigt, dass der Probenhalter 10 keine Probenträger beinhaltet.

In der Auswerteeinheit kann dieser Profilverlauf bzw. dieses detektierte Profilbild weiter ausgewertet und für entsprechende Anweisungen an eine automatische Bestückung und Entladung der Probenhalter z.B. in einem Eingangs- oder Ausgangsbereich einer automatisierten Probenhandhabungsvorrichtung, die insbesondere einen Roboter zum Erfassen und Verlagern einzelner Probenträger aufweisen kann, genutzt werden. So erkennt bei dem hier aufgenommenen Profilbild die Steuerung zunächst, dass auf dem Magazintableau 1 insgesamt drei Probenhalter angeordnet sind mit Probenträgern auf dem ersten Probenhalter 8 und dem zweiten Probenhalter 9 und einem nicht mit Proben bestückten weiteren Probenhalter 10. Ferner kann das System jedenfalls die quer zur Verschieberichtung des Magazintableaus 1 gelegene Position von bestückten und nicht bestückten Reihen mit Halteöffnungen bestimmen sowie aufgrund der unterschiedlichen Profilhöhen verschiedene Typen von Probenhaltern 12 und 13 unterscheiden, die sich in der in Fig. 2 gezeigten Profilhöhe des Profilverlaufes 17 und im Bereich 18 einerseits und im Abschnitt 20 andererseits äußern. Diese Informationen können nun genutzt werden, um entsprechend unbestückte Reihen von Halteöffnungen auf Probenträgern freizugeben, eine Störung auszugeben, wenn beispielsweise in einem zur Beladung vorgesehenen Abschnitt kein Probenhalter angeordnet ist und dgl.

Wenn die Sensoreinrichtung in den Sensorleisten 2 und 3 dabei nicht lediglich wie in Fig. 2 gezeigt ein Profil aufnimmt, sondern zugleich durch eine Abstandsmessung zu den jeweiligen detektierten Probenträgern feststellt, in welcher Position in Querrichtung zu der Verschieberichtung des Magazintableaus 1 gesehen ein Probenträger 12, 13 angeordnet ist, was in dem gezeigten Ausführungsbeispiel insbesondere dann von beiden seitlichen Rändern her möglich ist, wenn die Lichtschrankenelemente jeweils wechselseitig in den Öffnungen 4 bzw. 5 angeordnet sind, d.h. jeweils einem Sender bzw. Senderempfänger nachfolgend und vertikal oberhalb desselben einen Empfänger bzw. Reflektor und umgekehrt. Somit können weitere Informationen gewonnen werden, die für eine genauere Steuerung des Systems und zur Verhinderung von Fehlern ausgewertet werden können.

Das gezeigte Ausführungsbeispiel dient allein der Erläuterung der Erfindung und ist nicht etwa als beschränkend anzusehen.

### Bezugszeichenliste

- 1: Magazintableau
- 2: Sensorleiste
- 3: Sensorleiste
- 4: Öffnung
- 5: Öffnung
- 6: Markierung
- 7: Öffnung
- 8: Probenträger
- 9: Probenträger
- 10: Probenträger
- 11: Halteöffnung
- 12: Probenhalter
- 13: Probenhalter
- 14: Einzelsignale
- 15: Profil
- 16: Profillabschnitt
- 17: Profilabschnitt
- 18: Bereich
- 19: Abschnitt
- 20: Abschnitt
- 21: Abschnitt

## Patentansprüche

1. Aufnahmemagazin zur Aufnahme einer Vielzahl von entlang einer Längsachse langgestreckten, insbesondere im Wesentlichen zylinderförmigen, Probenträgern (12, 13) in wenigstens einem zur Aufnahme mehrer solcher Probenträger eingerichteten Probenhalter (8, 9, 10) für die automatisierte Handhabung einzelner solcher Probenträger (12, 13), insbesondere Entnahme aus und/oder Verbringung in die Probenhalter, insbesondere zur Verwendung in einem Eingangs- oder einem Ausgangsbereich einer automatisierten Probenhandhabungsvorrichtung, wobei das Aufnahmemagazin folgendes umfasst:
ein zwischen einer Bereitschaftsstellung, in der das Aufnahmemagazin für die automatisierte Handhabung der einzelnen Probenträger (12, 13) bereit steht, und einer Ladestellung, in der Probenträger (1 2, 13) und/oder Probenhalter (8, 9, 10) manuell eingebracht bzw. entnommen werden können, schubladenartig im Wesentlichen horizontal verschiebbares Magazintableau (1), auf dem der wenigstens eine Probenhalter (8, 9, 10) angeordnet bzw. anordbar ist,
**gekennzeichnet durch** eine Bestückungsdetektionseinrichtung zum Erkennen einer Bestückung des Magazintableaus (1) mit Probenhalter(n) (8, 9, 10) und/oder Probenträgern (12, 13) beim Bewegen des Magazintableaus (1) zwischen Lade- und Bereitschaftsstellung mit folgenden Komponenten:
a) wenigstens einem berührungslos arbeitenden Detektor zum Detektieren des Vorhandenseins von Gegenständen in einem Sensorbereich, der in einem Bewegungsweg von auf dem Magazintableau (1) befindlichen Probenhaltern (8, 9, 10) und/oder Probenträgern (12, 13) derart angeordnet ist, dass er auf dem Magazintableau (1) angeordnete, seinen Sensorbereich passierende Probenhalter (8, 9, 10) und/oder Probenträger (12, 13) detektieren kann;
b) einem Wegsensor, der einen Verschiebeweg bzw. eine aktuelle Position des Magazintableaus (1) beim Verschieben desselben zwischen der Ladestellung und der Bereitschaftsstellung erfasst und
c) einer Auswerteeinheit, in der die Daten des Detektors und des Wegsensors zusammengeführt und hinsichtlich des Vorhandenseins wenigstens eines Probenhalters (8, 9, 10) und/oder Probenträgers (12, 13) korreliert zu einer bestimmten Wegposition des Verschiebeweges ausgewertet werden.

2. Aufnahmemagazin nach Anspruch 1, **dadurch gekennzeichnet, dass** der berührungslos arbeitende Detektor eine Lichtschranke ist.

3. Aufnahmemagazin nach Anspruch 2, **dadurch gekennzeichnet, dass** der berührungslos arbeitende Detektor eine transmittive Lichtschranke ist.

4. Aufnahmemagazin nach einem der vorhergehenden Ansprüche, **dadurch gekennzeichnet, dass** der Wegsensor ein insbesondere optisch oder magnetisch detektierender Inkrementalsensor ist.

5. Aufnahmemagazin nach einem der vorhergehenden Ansprüche, **dadurch gekennzeichnet, dass** sie wenigstens zwei, insbesondere eine Vielzahl von in einem Detektionsbereich vertikal übereinander angeordneten berührungslosen Detektoren aufweist, die an Positionen angeordneten sind, die in der Projektion von beim Verschieben des Magazintableaus (1) von auf diesem angeordneten Probenhaltern (8, 9, 10) und Probenträgern (12, 13) überstrichen werden.

6. Aufnahmemagazin nach Anspruch 5, **dadurch gekennzeichnet, dass** die Auswerteeinheit zum Aufnehmen eines Profils von auf dem Magazintableau (1) angeordneten, mittels der von den vertikal übereinander angeordneten Detektoren erfassten Probenträger (12, 13) und -halter (8; 9, 10) eingerichtet ist.

7. Aufnahmemagazin nach einem der vorhergehenden Ansprüche, **dadurch gekennzeichnet, dass** die Auswerteeinheit zum Ausgeben eines Alarmsignals, wenn abweichend von einer vorbestimmten Vorgabe einer bestimmten Position korrelierend ein Probenhalter (8, 9, 10) bzw. Probenträger (12, 13) detektiert oder nicht detektiert wird, eingerichtet ist.

8. Verfahren zum Überwachen des Vorhandenseins von entlang einer Längsachse langgestreckten, insbesondere im Wesentlichen zylinderförmigen, Probenträgern und/oder von Probenhaltern zur Aufnahme derartiger Probenträger auf einem zwischen einer Bereitschaftsstellung und einer Ladestellung schubladenartig im Wesentlichen horizontal verschiebbaren Magazintableau eines Aufnahmemagazins zur Aufnahme einer Vielzahl solcher Probenträger in wenigstens einem Probenhaltern, wobei mittels wenigstens eines berührungslos arbeitenden Detektors zum Detektieren des Vorhandenseins von Gegenständen in einem Sensorbereich beim Verschieben des Magazintableaus dessen Sensorbereich passierende Probenhalter und/oder Probenträger detektiert werden, wobei ferner mittels eines Wegsensor der Verschiebeweg des Magazintableaus beim seinem Verschieben festgestellt wird und wobei der Verschiebeweg und die Detektion des Detektors derart korreliert werden, dass eine Wegposition, an der das Vorhandensein eines Probenhalters und/oder Probenträgers festgestellt ist, mit dem Detektionssignal des festgestellten Probenhaltes und/oder Probenträgers miteinander zu einem Datensatz verknüpft werden.

9. Verfahren nach Anspruch 8, **dadurch gekennzeichnet, dass** mit zwei oder mehr Detektoren während des Verschiebens des Magazintableaus ein Projektionsprofil der darauf angeordneten Probenhalter und/oder Probenträger aufgenommen und mit einer über den Wegsensor festgestellten Position des Magazintableaus entlang des Verschiebeweges korreliert wird.

10. Verfahren nach Anspruch 9, **dadurch gekennzeichnet, dass** ein Projektionsprofil der auf dem Magazintableau angeordneten Probenhalter aufgenommen und anhand der geometrischen Abmessungen des Projektionsprofils einer erkannten Projektion eines Probenhalters und Abgleich dieser Abmessungen mit bekannten Abmessungen verschiedener Typen von auf dem Magazintableau anordbaren Probenhaltern, der Typ dieses Probenhalters bestimmt wird.

11. Verfahren nach einem der Ansprüche 9 oder 10, **dadurch gekennzeichnet, dass** ein Projektionsprofil der auf dem Magazintableau angeordneten Probenträger aufgenommen und anhand der geometrischen Abmessungen des Projektionsprofils einer erkannten Projektion eines Probenträgers und Abgleich dieser Abmessungen mit bekannten Abmessungen verschiedener Typen von auf dem Magazintableau anordbaren Probenträgern, der Typ dieses Probenträgers bestimmt wird.

12. Verfahren nach einem der Ansprüche 8 bis 11, **dadurch gekennzeichnet, dass** bei gegenüber einer Vorgabe unerwartetem Vorhandensein und/oder nicht Vorhandensein eines Probenhalters und/oder eines Probenträgers ein Alarm ausgegeben wird.

## Claims

1. A holder cartridge for holding a plurality of sample carriers (12, 13), elongated along a longitudinal axis, which are in particular substantially cylindrical, in at least a sample holder (8, 9, 10) arranged for holding several such sample carriers for automated handling of individual such sample carriers (12, 13), in particular to remove them from and/or to insert them into the sample holders, in particular for use in an inlet or an outlet area of an automated sample handling device, whereas the holder cartridge contains the following items:
a cartridge tray (1), substantially mobile horizontally, in a drawer-like manner, between a ready position, in which the holder cartridge is ready for automated handling of the individual sample carriers (12, 13), and a loading position, in which sample carriers (12, 13) and/or sample holders (8, 9, 10) can be inserted or removed manually, a tray on which said at least one sample holder (8, 9, 10) is arranged or can be arranged, **characterised by** a loading detection means for detecting the loading level of the cartridge tray (1) with sample holders (8, 9, 10) and/or sample carriers (12, 13) for moving the cartridge tray (1) between the loading position and the ready position with the following components:
a) at least one detector functioning contactless for detecting the presence of objects in a sensing area, which is provided in a movement path of sample holders (8, 9, 10) and/or sample carriers (12, 13) situated on the cartridge tray (1), is arranged in such a way that it can detect sample holders (8, 9, 10) and/or sample carriers (12, 13) arranged on the cartridge tray (1) and passing through its sensing area;
b) a displacement sensor, which detects a displacement path or a current position of the cartridge tray (1) when the latter moves between the loading position and the ready position and
c) an interpreting unit, in which the data of the detector and of the displacement sensor are combined, then correlated as regards the presence of at least one sample holder (8, 9, 10) and/or the sample carrier (12, 13)and interpreted to determine the displacement position of the displacement path.

2. A holder cartridge according to claim 1, **characterised in that** the detector functioning contactless is a photoelectric barrier.

3. A holder cartridge according to claim 2, **characterised in that** the detector functioning contactless is a transmittive photoelectric barrier.

4. A holder cartridge according to any of the preceding claims, **characterised in that** the displacement sensor is an incremental sensor, in particular for optical or magnetic detection.

5. A holder cartridge according to any of the preceding claims, **characterised in that** it contains at least two, in particular a plurality of contactless detectors arranged vertically on top of each other in a detection area, which are provided in positions which are brushed over in projection by sample holders (8, 9, 10) and sample carriers (12; 13), arranged on the cartridge tray (1) when the latter is moving.

6. A holder cartridge according to claim 5, **characterised in that** the interpreting unit is designed for holding a profile of sample carriers (12, 13) and holders (8, 9, 10) provided on the cartridge tray (1) and sensed by the detectors arranged vertically on top of each other.

7. A holder cartridge according to any of the preceding claims, **characterised in that** the interpreting unit is provided for generating an alarm signal, if a sample holder (8, 9, 10) or a sample carrier (12, 13) is detected or not in correlation to a pre-set position.

8. A method for monitoring the presence of sample carriers and/or sample holders, elongated along a longitudinal axis which are in particularly substantially cylindrical, for accommodating such sample carriers on a tray of a holder cartridge, which is substantially mobile horizontally, in a drawer-like manner between a ready position and a loading position for receiving a plurality of such sample carriers in at least one sample holder, whereas sample holders and/or sample carriers are detected by means of at least one detector functioning contactless for detecting the presence of objects, as said holders and carriers pass in a sensing area of the cartridge tray when the latter is moving, whereas the displacement path of the cartridge tray is determined moreover by means of a displacement sensor as said tray moves and whereas the displacement path and the detection of the detector are correlated in such a way that a displacement position at which the presence of a sample holder and/or of a sample carrier is determined, is linked together to the detection signal of the determined sample holder and/or sample carrier to obtain a data set.

9. The method according to claim 8, **characterised in that** a projection profile of the sample holders and/or sample carriers is recorded by two detectors or more during the displacement of the cartridge tray and is correlated with a position of the cartridge tray along the displacement path, said position being determined by the displacement sensor.

10. The method according to claim 9, **characterised in that** a projection profile is recorded on the sample holder arranged on the cartridge tray and the type of said sample holder is defined using the geometrical dimensions of the projection profiles of a recognised projection of a sample holder and by adjusting said dimensions with known dimensions of different types of sample holders which can be arranged on the cartridge tray.

11. A method according to any of the claims 9 to 10, **characterised in that** a projection profile is recorded on the sample carrier arranged on the cartridge tray and the type of said sample carrier is defined using the geometrical dimensions of the projection profiles of a recognised projection of a sample carrier and by adjusting said dimensions with known dimensions of different types of sample carriers which can be arranged on the cartridge tray.

12. The method according to any one of the claims 8 to 11, **characterised in that** an alarm is generated in the unexpected presence and/or the absence of a sample holder and/or a sample carrier, with respect to a set-situation.

## Revendications

1. Cartouche d'enregistrement permettant de contenir une pluralité de portes-échantillons (12, 13) allongés le long d'un axe longitudinal, qui sont en particulier sensiblement cylindriques, dans au moins un contenant d'échantillons (8, 9, 10) disposés pour contenir plusieurs portes-échantillons de ce type, pour la manipulation automatisée de tels portes-échantillons individuels (12, 13), en particulier pour les retirer des contenants et/ou pour les introduire dans ces contenants, en particulier pour une utilisation dans une zone d'entrée ou de sortie d'une dispositif de manipulation des échantillons automatisé, où la cartouche d'enregistrement contient les éléments suivants :
un plateau de cartouche (1), sensiblement mobile horizontalement, à la manière d'un tiroir, entre une position prête, dans laquelle la cartouche d'enregistrement est prête pour le manipulation automatisée des portes-échantillons individuels (12, 13), et une position de chargement, dans laquelle les portes-échantillons (12, 13) et/ou les contenants d'échantillons (8, 9, 10) peuvent être introduits ou retirés manuellement, plateau sur lequel ledit au moins contenant d'échantillons (8, 9, 10) est disposé ou peut être disposé,
**caractérisée par** des moyens de détection de chargement afin de détecter le niveau de chargement de la cartouche d'enregistrement (1) avec des contenants d'échantillons (8, 9, 10) et/ou des portes-échantillons (12, 13) pour déplacer la cartouche d'enregistrement (1) entre la position de chargement et la position prête avec les composants suivants :
a) au moins un détecteur fonctionnant sans contact pour détecter la présence d'objets dans une zone de détection, qui est prévue dans un trajet de mouvement des contenants d'échantillons (8, 9, 10) et/ou des portes-échantillons (12, 13) situés sur le plateau de cartouche (1), est disposé de manière à pouvoir détecter les contenants d'échantillons (8, 9, 10) et/ou les portes-échantillons (12, 13) prévus sur le plateau de cartouche (1) et passant à travers sa zone de détection ;
b) un capteur de déplacement, qui détecte un trajet de déplacement ou une position courante du plateau de cartouche (1) lorsque ce dernier se déplace entre la position de chargement et la position prête et
c) une unité d'interprétation, dans laquelle les données du détecteur et du capteur de déplacement sont combinées, puis corrélées en ce qui concerne la présence d'au moins un contenant d'échantillons (8, 9, 10) et/ou le porte-échantillon (12, 13) et interprétées pour déterminer la position de déplacement du trajet de déplacement.

2. Cartouche d'enregistrement selon la revendication 1, **caractérisée en ce que** le détecteur fonctionnant sans contact est une cellule photoélectrique.

3. Cartouche d'enregistrement selon la revendication 2, **caractérisée en ce que** le détecteur fonctionnant sans contact est une cellule photoélectrique transmittive.

4. Cartouche d'enregistrement selon l'une quelconque des revendications précédentes, **caractérisée en ce que** le capteur de déplacement est un capteur incrémental, en particulier pour une détection optique ou magnétique.

5. Cartouche d'enregistrement selon l'une quelconque des revendications précédentes, **caractérisée en ce qu'**elle contient au moins deux, en particulier une pluralité de détecteurs sans contact, disposés verticalement au-dessus les uns des autres dans une zone de détection, qui sont prévus dans des positions parcourues en projection par des contenants d'échantillons (8, 9, 10) et des portes-échantillons (12; 13), disposés sur la cartouche d'enregistrement (1) lorsque cette dernière se déplace.

6. Cartouche d'enregistrement selon la revendication 5, **caractérisée en ce que** l'unité d'interprétation est conçue pour contenir un profil de portes-échantillons (12, 13) et de contenants d'échantillons (8, 9, 10) disposés sur la cartouche d'enregistrement (1) et captés par les détecteurs aménagés verticalement au-dessus les uns des autres.

7. Cartouche d'enregistrement selon l'une quelconque des revendications précédentes, **caractérisée en ce que** l'unité d'interprétation est prévue pour générer un signal d'alarme, si un contenant d'échantillons (8, 9, 10) ou un porte-échantillon (12, 13) est détecté ou non en corrélation avec une position prédéterminée.

8. Procédé de surveillance de la présence de portes-échantillons et/ou de contenants d'échantillons, allongés le long d'un axe longitudinal qui sont en particulier sensiblement cylindriques, pour recevoir lesdits portes-échantillons sur un plateau d'une cartouche d'enregistrement, qui est sensiblement mobile horizontalement, à la manière d'un tiroir entre une position prête et une position de chargement permettant de recevoir une pluralité de tels portes-échantillons dans au moins un contenant d'échantillons, où au moins un détecteur fonctionnant sans contact pour détecter la présence d'objets dans une zone de détection permet de détecter les contenants d'échantillons et/ou les portes-échantillons lorsque ces derniers traversent une zone de détection du plateau de cartouche lorsque celle-ci se déplace, où le trajet de déplacement du plateau de la cartouche est déterminé de plus au moyen d'un capteur de déplacement tandis que ledit plateau se déplace et où le trajet de déplacement et la détection du détecteur sont mis en corrélation de telle sorte qu'une position de déplacement à laquelle la présence d'un porte-échantillon et/ou un contenant d'échantillons est déterminée, est reliée au signal de détection du contenant d'échantillons et/ou porte-échantillon déterminé pour obtenir un ensemble de données.

9. Procédé selon la revendication 8, caractérisé en qu'un profil de projection des contenants d'échantillons et/ou des portes-échantillons est enregistré par deux détecteurs ou davantage pendant le déplacement du plateau de la cartouche et est corrélé avec une position du plateau de cartouche le long du trajet de déplacement, ladite position étant déterminée par le capteur de déplacement.

10. Procédé selon la revendication 9, caractérisé en qu'un profil de projection est enregistré sur le contenant d'échantillons disposé sur le plateau de cartouche et le type dudit contenant d'échantillons est défini à l'aide des dimensions géométriques des profils de projection d'une partie saillante reconnue d'un contenant d'échantillons et en ajustant lesdites dimensions avec des dimensions connues des différents types des contenants d'échantillons pouvant être prévus sur le plateau de cartouche.

11. Procédé selon l'une quelconque des revendications 9 à 10, **caractérisé en ce qu'**un profil de projection est enregistré sur le contenant d'échantillons disposé sur le plateau de cartouche et le type dudit porte-échantillons est défini à l'aide des dimensions géométriques des profils de projection d'une partie saillante reconnue d'un porte-échantillons et en ajustant lesdites dimensions avec des dimensions connues des différents types des contenants d'échantillons pouvant être prévus sur le plateau de cartouche.

12. Procédé selon l'une des revendications 8 à 11, **caractérisé en ce qu'**une alarme est générée en la présence et/ou l'absence inattendue d'un contenant d'échantillons et/ou d'un porte-échantillons par rapport à un cas de figure bien précis.
